# EUROPEAN PATENT APPLICATION

(11) **EP 2 394 898 A1**
(43) Date of publication of application: **14.12.2011**
(21) Application number: 11168759.6
(22) Date of filing: 06.06.2011
(51) Int. Cl.: B62M 1/02, B62M 11/10, B62M 11/14, F16H 3/00

(54) **Device for inverting the direction of rotation of the pedal stroke for bicycles**

(30) Priority: 11.06.2010 IT TO20100499
(71) Applicant: Testi S.r.l., 06074 Olmo (PG) (IT)
(72) Inventor: Catarinelli, Marco, 06100 Perugia (IT)
(74) Representative: Di Gennaro, Sergio

(57) **Abstract**

Device (10,10') for reversing the direction of rotation of the pedal stroke when pedalling backwards on a bicycle (100) or exercise bicycle, comprising: a driving rotating shaft (90), a first driven rotating organ (12a) and a second driven rotating organ (12b) mounted on said shaft (90); a first freewheel bearing (13a) operatively active between the first driven rotating organ (12a) and the driving rotating shaft (90); a second freewheel bearing (13b) operatively active between the second driven rotating organ (12b) and the driving rotating shaft (90), so as to make said second rotating organ (12b) integral to said shaft (90) during the rotation of said shaft (90) in a direction (A) equal to a first direction (1) of rotation of at least one wheel (5a) or flywheel of said bicycle (100) or exercise bicycle; the first driven rotating organ (12a) and the second driven rotating organ (12b) are being engaged on at least one satellite gear (20,21) mounted on a rotatory support (17) separated from the shaft (90) and allowing a rotation of the pedals in a second direction (B), opposite to said first direction (A), of the wheel (5a) or flywheel.

## Description

The present invention is relative to the field of the components for bicycles and, in detail, it is relative to a device for reversing the direction of rotation of the pedal stroke.

Document US 5, 884, 927 discloses a drive unit for bicycles comprising a pair of one-way clutches, which are opposite to each other, mounted on a shaft and adapted to constitute active parts in the drive of said bicycle, in an alternative way with respect to each other, when the pedals are respectively rotated clockwise or anticlockwise. In document US 5, 884, 927, this function is fulfilled by means of a pair of pinion gears, which are opposite to each other, are constrained to the respective clutches and mesh with a pair of cogwheels, so as to form a differential type transmission unit.

Document EP 2002/0425025 discloses a device for inverting the direction of rotation of the pedal stroke for bicycles, said device having:
- a first driven rotating organ, which is mounted on a driving rotating shaft arranged in the central node of a bicycle; said shaft presenting two ends, which are opposite to each other and are respectively connected to a pedal crank.
- a first freewheel mechanism, which is operatively active between the first driven rotating organ and the driving rotating shaft;
- a second driven rotating organ, which is mounted on said shaft and is rigidly connected to at least one crown wheel of the bicycle;
- a second freewheel mechanism, which is operatively active between the second driven rotating organ and the driving rotating shaft, so as to make said second rotating organ integral to said shaft during the rotation of said shaft concurring with the direction of rotation of the wheels of the bicycle during advancement; said first and second freewheel mechanisms being mounted in opposite rotary direction on said shaft;
- torque inverter means, which are operatively active between the first driven rotating organ and the second driven rotating organ, to cause them to rotate simultaneously and according to mutually opposite directions of rotation.

Document EP 2002/0425025 also discloses the use of a first cogwheel and of a second cogwheel, which are respectively integral to the first driven organ and to the second driven organ; furthermore there is provided a third cogwheel, engaged both to the first cogwheel and to the second cogwheel, to transmit motion from the first cogwheel to the second cogwheel or vice versa.

The devices of the known type used for reversing the direction of rotation of the pedal stroke present some drawbacks; in particular, once they have been mounted on a bicycle, they hinder the freedom of reverse movement, i.e. in the direction that is opposite to the advancement direction; another limitation is due, instead, to the external geometrical shape of the container housing the whole mechanism, which presents external projections necessary for the mechanical anchorage of the satellite gears needed to reverse the torque.

The object of the present invention is to describe a device for reversing the direction of rotation of the pedal stroke, which does not present the drawbacks described above.

According to the present invention, a device for reversing the direction of rotation of the pedal stroke is provided, which is of the type claimed in the first claim.

The invention will now be described with reference to the accompanying drawings, which illustrate a nonlimiting embodiment, wherein:
- figure 1 illustrates a lateral view of a bicycle provided with a device for reversing the direction of rotation of the pedal stroke according to the present invention;
- figure 2 illustrates an exploded view, partially in section, of the device for reversing the direction of rotation of the pedal stroke of figure 1;
- figure 3 illustrates a transverse section of part of the device of figure 2;
- figure 4 illustrates a transverse section of a cartridge container of a part of the device of figure 2;
- figure 5 illustrates an exploded view, partially in section, of a version of the device for reversing the direction of rotation of the pedal stroke of figure 1.

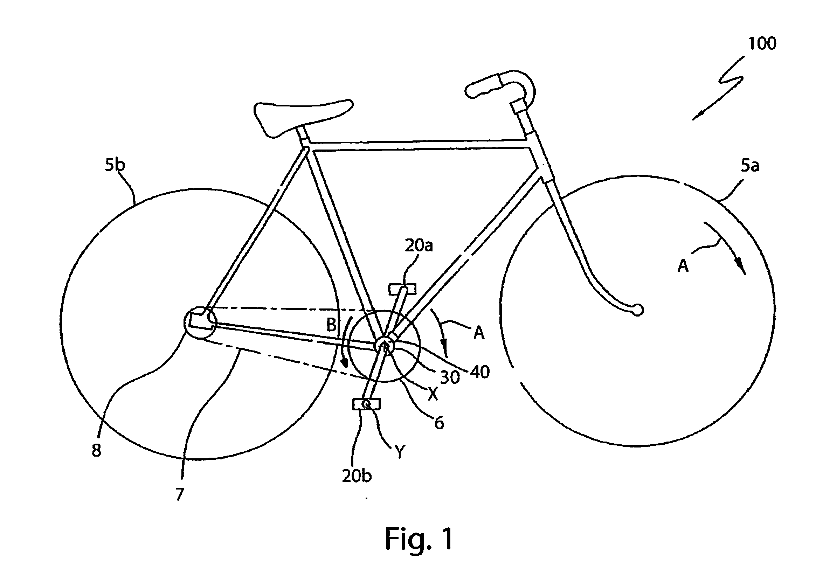

With reference to figure 1 (b), reference number 10 indicates a device for reversing the direction of rotation of the pedal stroke as a whole.

Device 10 is installed on a bicycle 100 comprising a pedal assembly 40 or bottom bracket and a plurality of pedal cranks 20a, 20b, each of which is provided with a respective pedal, as well as a front wheel 5a and a rear wheel 5b; pedal assembly 40 is mounted in a housing 30 of the frame of bicycle 100.

Pedal assembly 40 is connected to rear wheel 5b of the bicycle by means of one or more crown gears 6, a chain 7, and a pinion 8, so as to transmit the forces exerted on pedal cranks 20a, 20b to rear wheel 5b and to the sliding surface (ground).

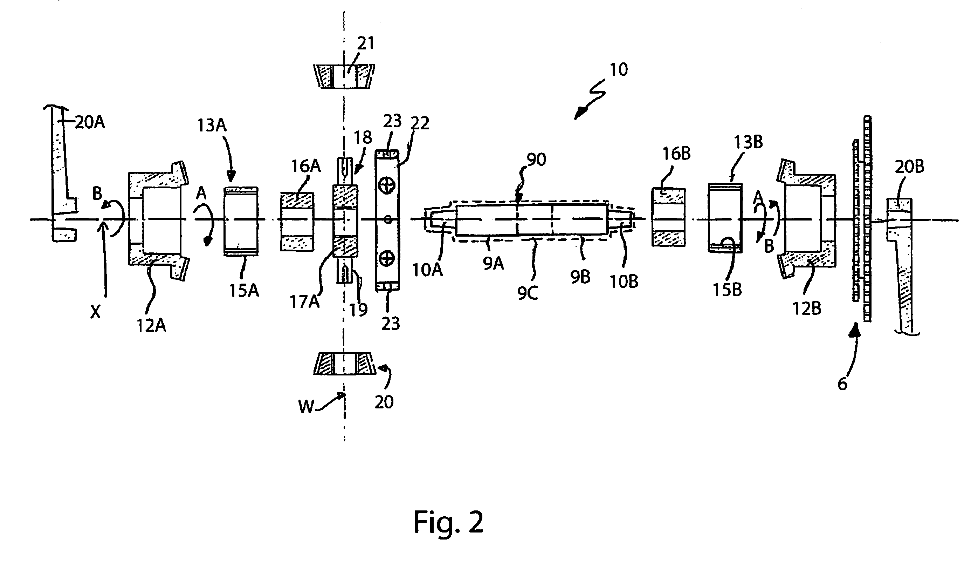

As shown in figure 2, bottom bracket 40 comprises a shaft 90, which is rotatably inserted into housing 30 to rotate around its longitudinal axis X and presents a first end 10a and a second end 10b provided with lap joints suited for pedal cranks 20a, 20b, which are mounted in mutually opposite directions (180°).

Each pedal crank 20a, 20b comprises a first end, connected by means of a lap joint to shaft 90, and a second end, opposite to the first end, which is fitted to a pedal that is mounted so as to rotate around an axis Y which is substantially parallel to axis X of shaft 90.

Device 10, in detail, comprises a first bevel gear rotating organ or first planetary gear 12a, which is coaxially mounted on shaft 90 by means of a first freewheel bearing 13a, which is operatively active between first planetary gear 12a and shaft 90, only if shaft 90 rotates in a first direction of rotation (which hereinafter will be called REVERSE direction). Furthermore, device 10 comprises a second rotating organ or second planetary gear 12b, which, like first planetary gear 12a, is coaxially mounted on shaft 90 by means of a second freewheel bearing 13b, which is operatively active between second planetary gear 12b and shaft 90, only if the shaft rotates in a second direction of rotation that is opposite to the first one (and hereinafter will be called DIRECT direction).

Device 10 according to the present invention comprises, furthermore, a plurality of bushings 16a, 16b, which are interposed between the shaft and the first or second freewheel bearing 13a, 13b. In detail, first planetary gear 12a is mounted in a coaxial fashion on a first end portion 90a of shaft 90 by means of first freewheel bearing 13a and of a first bushing 16a. Second planetary gear 12b is mounted, by means of second freewheel bearing 13b and of a second bushing 16b, on a second end portion 90b of shaft 90, which is opposite to first end portion 90a.

Freewheel bearings 13a and 13b are bearings of the known type and, as shown in figure 2, they can consist, for example, of cylindrical rollers 15a and 15b. Rollers 15a and 15b, on their inside, are in contact with the first and second bushing 16a, 16b, while an external part 14a and 14b of each freewheel bearing 13a, 13b is made integral to the respective first planetary gear 12a or second planetary gear 12, for example through introduction under pressure by diameter interference fit or by means of coupling means of the known type.

Second planetary gear 12b is rigidly connected to the crown gear or to the group of crown gears 6 of the bicycle, which are commonly axially arranged on pedal assembly 40, so as to guarantee a variation of the rotation speed ratio between shaft 90 and rear wheel 5b of the bicycle. Crown gear group 6 is of the known type.

Device 10 comprises, furthermore, torque inverter means 12a, 12b, 20, 21 comprising both planetary gears 12a and 12b and satellite gears 20, 21, which are free to rotate on a respective rotation axis W, that is orthogonal to axis X and crosses axis X itself of shaft 90, and are connected to the first and the second planetary gear.

Device 10 according to the present invention comprises, furthermore, a rotatory support 17, which is adapted to be inserted onto shaft 90; this insertion is allowed by the presence of first bushing 16a and of second bushing 16b, which are mounted - during the assembly of device 10 itself - after the insertion of rotatory support 17 itself.

Satellite gears 20, 21 are rotatably mounted on a first end 18 and on a second end 19 of rotatory support 17, opposite to each other, and radially protrude from a central body 17a of rotatory support 17 itself. Opposite ends 18, 19 of rotatory support 17 are pins acting as support for rotation axis W of satellite gears 20, 21.

Is should be noted that, from a kinematic point of view, only one of the satellite gears is theoretically necessary for the actual operation of device 10 according to the present invention; though, in reality and in practice, it is preferable to have at least two satellite gears, so as to reduce load stresses and improve the balance by reducing the eccentricity during a possible revolution motion.

Device 10 according to the present invention comprises, furthermore, an annular element 22; said annular element 22 is a containing ring, which encloses rotatory support 17, once satellite gears 20, 21 have been mounted on the respective opposite ends 18, 19.

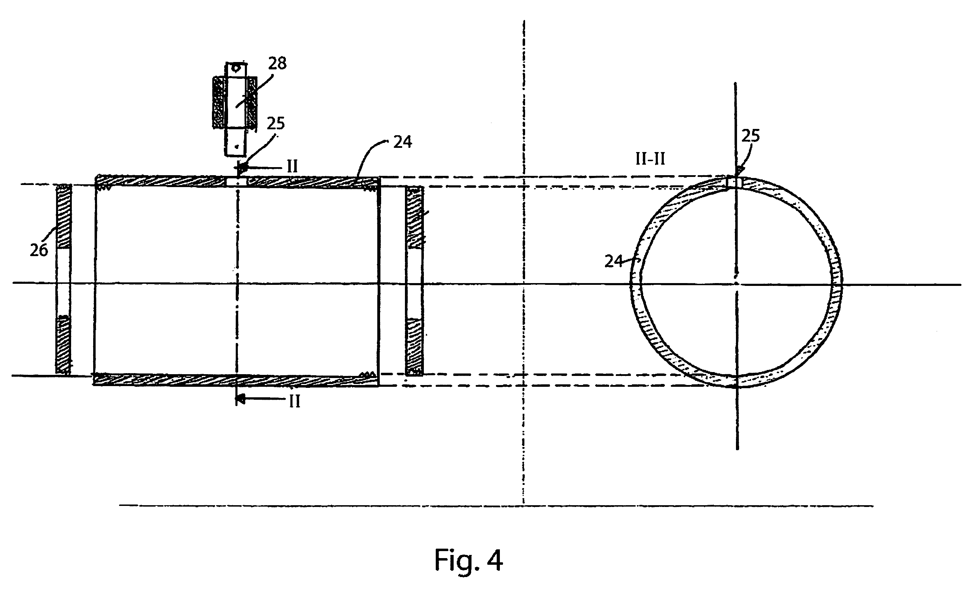

Annular element 22, as far as its function is concerned, does not only fulfill the containing function described above, but it is also aimed at hindering the revolution motion of rotatory support 17, in case a removable pin 28 (shown in detail in figure 4) is introduced; more in particular, removable pin 28 is engaged between the cartridge container of device 10 and any of holes 23 present on the surface of annular element 22.

Figure 4 shows a cartridge container 24, which is adapted to contain whole device 10, including the support bearings, the oil retainers and containing means 26, 27, respectively mounted on the two ends of cartridge container 24, which allow cartridge 24 to enclose the whole mechanism in a stable way. Furthermore, figure 4 also shows a drawing of removable pin 28, which can be preferably inserted and removed with a remote command.

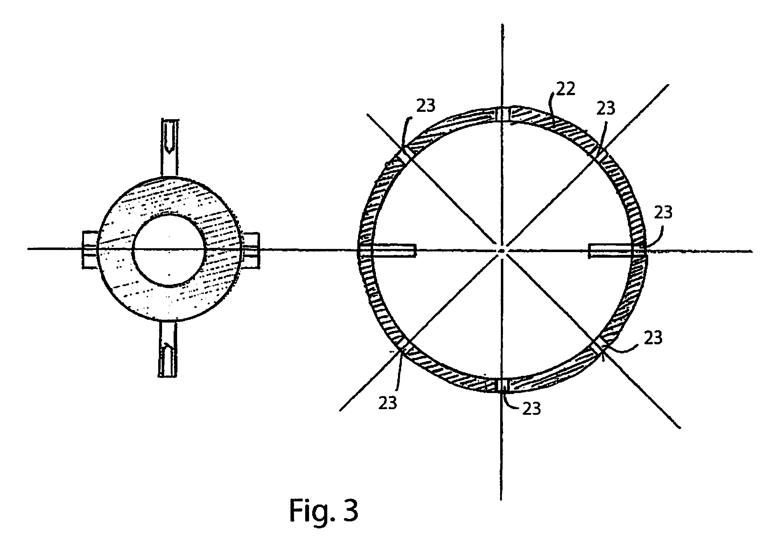

Cartridge container 24 comprises a hole 25, which is adapted to allow the passage of removable pin 28, which - in use - passes through the wall of cartridge container 25; the removable pin can possibly also pass through a hole 23 of ring 22. In particular, as shown in figure 3, ring 22 comprises a plurality of holes 23, which are radially arranged on the whole circumference delimiting its external surface.

After having described device 10 according to the present invention from a structural point of view, the operation mode of device 10, which allows the direction of rotation of the pedal stroke to be reversed while maintaining the drive active, will now be described.

For the sake of clarity, it should be noted that, in the following description, the freewheel mechanism, like the freewheel bearing, is a mechanism inserted between two rotating coaxial organs (commonly respectively defined as driven organ and driving organ), which is adapted to make them integral to each other, only when the rotation speed of the driving organ tends to be higher than the rotation speed of the driven organ.

Therefore, when the bicycle moves forward, the shaft acts as a driving organ, since it is able to transmit the rotatory movement received by means of pedal cranks 20a and 20b to first planetary gear 12a or to second planetary gear 12b or driven organs.

Thus, in other words, the first and the second freewheel bearings 13a, 13b are mounted on shaft 90 in an operative rotatory direction opposite to each other.

This means that the direction of rotation of shaft 90 (driving shaft) engaging the connection to first freewheel bearing 13a is opposite to the direction of rotation of shaft 90 engaging the connection to second freewheel bearing 13b.

In particular, the direction of rotation of shaft 90 engaging the connection to second freewheel mechanism 13b corresponds with the DIRECT direction of rotation of the pedals (namely of pedal cranks 20a , 20b), which, in order to make the drawing easier, is illustrated in figure 2 as a clockwise direction and is indicated by curved arrow A, i.e. with the direction of rotation of wheels 5a and 5b during the advancement of the bicycle.

As a consequence, the direction of rotation of shaft 90 engaging the kinematic connection to first freewheel bearing 13b is the REVERSE direction of rotation (B), which is opposite to the direction of rotation of wheels 5a and 5b during the advancement of the bicycle.

First bushing 16a and second bushing 16b are aimed at:
- adjusting the value of the diameter of axis 90 to the value of the internal diameter respectively of the first and of the second freewheel bearing 13a, 13b; and
- guaranteeing an appropriately smooth and hard surface according to the requirements set forth by the technical features declared by the manufacturer of freewheel bearings 13a, 13b.

First and second bushings 16a, 16b are inserted onto shaft 90 in a manner suited to guarantee a rigid and integral coupling (for example by means of a lap joint or through introduction under pressure by diameter interference fit).

Let's assume that a rider is in a stationary position and starts pedaling in a DIRECT direction, i.e. in the same direction of rotation indicated by arrow A of wheels 5a, 5b of bicycle 100 during advancement;the action of the rider on pedals 20a, 20b causes the rotation of driving shaft 90.

The rotation of driving shaft 90 causes the second freewheel to rotate and to drag second planetary gear 12b in the same direction of rotation indicated by arrow A, said second planetary gear 12b transmitting the same motion to crown gear group 6. Crown gear group 6, by means of chain 7, determines the rotation of pinion 8 connected to rear wheel 5b of bicycle 100, thus determining its advancement.

By means of satellite gears 20 and 21 of the bevel gears, second planetary gear 12b transmits a rotation in an opposite direction (indicated by arrow B in the figures accompanying the present description) to first planetary gear 12a and to first freewheel bearing 13a. In this case, first freewheel bearing 13a rotates in an opposite direction with respect to the direction of rotation of shaft 90 and, therefore, it cannot be engaged; as a consequence, it continues to rotate freely with respect to shaft 90 itself.

If the rider stops or quits pedaling in order to reverse the direction of rotation exerted on pedal cranks 20a, 20b, second planetary gear 12b is released from shaft 90; in a condition of interruption of the pedal stroke with bicycle 100 in motion, the angular speed of driving shaft 90 gradually decreases until it becomes equal to zero (the pedal stroke stops), in order to then carry on with a relative acceleration which causes it to rotate in a reverse direction with respect to the one of te second planetary gear 12b.

Therefore, the reversal of the direction of rotation of the pedal stroke causes, first of all, the release of second planetary gear 12b and, immediately after that, it causes shaft 90 to engage first freewheel bearing 13 which, since it is integral to shaft 90, now rotates in a REVERSE direction (indicated by arrow B), as well. In this condition, first freewheel bearing 13a drags first planetary gear 12a, to which it is integral, in the same REVERSE direction of rotation (arrow B) of shaft 90. First planetary gear 12a, by means of satellite gears 20, 21, reverses and transmits a rotation motion to the second planetary gear 12, which then rotates again in the DIRECT direction (arrow A).

Since crown gear group 6 is constrained to second planetary gear 12b, in this condition crown gear group 6 itself still rotates in the DIRECT direction (direction indicated by arrow A), while pedal cranks 20a, 20b and the shaft are rotating in the REVERSE direction (arrow B).

The passage from the REVERSE pedal stroke to the DIRECT pedal stroke causes again first freewheel bearing 13a to be released and shaft 90 to engage the second freewheel bearing 13b, thus going back to the initial condition, in which the rotation of the pedals and the rotation of crown gear group 6 are concurrent and take place in the DIRECT direction (arrow A).

Therefore, by means of the device according to the present invention, crown gear group 6 always rotates in the same "DIRECT" direction (arrow A) regardless of the direction of rotation of the pedals, which can be both DIRECT and REVERSE.

The use of device 10 described above, if applied to a common bicycle, prevents it from moving in reverse; therefore, if bicycle 100 needed to be moved in reverse, device 10 according to the present invention would hinder the movement of bicycle 100 itself (namely a rotation of front wheel 5a and of rear wheel 5b implying a rotation in the direction indicated by arrow B).

In order to allow bicycle 100 housing device 10 according to the present invention to freely move in reverse, the invention envisages the release of removable pin 28, which, when it is retracted, is extracted from hole 23 of annular element 22, thus freeing both the latter and rotatory support 17 of first and second satellite gear 20, 21.

In this way, rotatory support 17, which is mounted in a rotatory manner on shaft 90, does not constrain any longer satellite gears 20, 21 to a fixed position with respect to cartridge container 24; on the contrary, first and second satellite gears 20, 21 are free to be dragged into the rotation motion with respect to axis X by the planetary gears and, all together, they do not constitute any longer a torque inverter.

Therefore, when removable pin 28 is removed from its seat, bicycle 100 behaves in the same way as a traditional bicycle in which device 10 is not installed: it simply loses the feature of the REVERSE pedal stroke, but it gains back the freedom to move in reverse that it originally had.

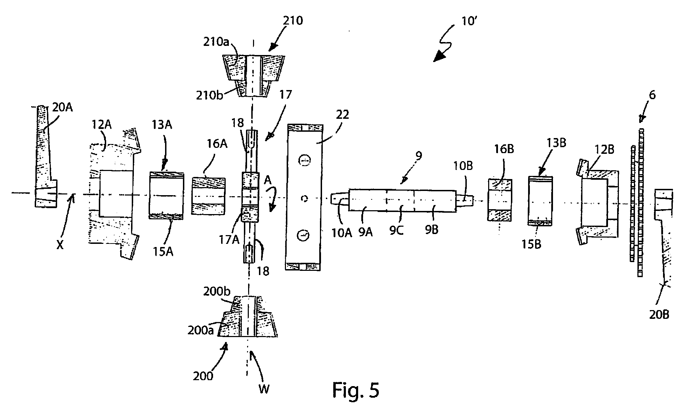

A second embodiment of device 10 according to the present invention is shown in figure 5, which illustrates a device 10' that differs from the device previously described in that the two bevel gears, besides acting as torque inverters, also act as reducers of the number of revolutions of crown gear group 6 with respect to the number of revolutions of shaft 90 (and, thus, of pedal cranks 20a, 20b), only relatively to one of the two directions of rotation.

The reduction of the number of revolutions in one direction of rotation is obtained by choosing a different ratio of the number of teeth of each bevel gear (first and second planetary gears 12a, 12b and respective first and second satellite gears 200, 210).

The parameters which affect a bevel gear are the module (concerning the dimension of the teeth of the single gears) and the numerical ratio between the number of teeth of first and second planetary gears 12a, 12b and the number of teeth of first and second satellite gears 200, 210, each of which is provided with two different gears 200a, 200b; 210a, 210b arranged in series, of which one has a more tapered shape than the other, thus generating two different reduction ratios.

If the two bevel gears have different numerical ratios, the geometry of the teeth will be different, as well, thus making each satellite gear 200, 210 only compatible with its planetary gear 12a, 12b. Hence, in order to overcome this drawback, it is necessary to use a double number of satellite gears and make integral and coaxial, two by two, satellite gears 200, 210 for each axis of the support, choosing a priori the diameters of first and of second planetary gear 12a, 12b, which have to be suited for the purpose and, thus, different from one another.

Since the REVERSE pedal stroke involves leg muscles which have a lower strength than the ones used in the DIRECT pedal stroke, it could be convenient to use the revolution reducer in the direction of the REVERSE pedal stroke, thus reducing the stress to which the legs are subject.

In order to exploit the reducer in the REVERSE rotation, first bevel gear 12a, 200a comprising first planetary gear 12a and first gear 200a of first satellite gear 200 (and, in case of multiple satellite gears, also first gear 210a of second satellite gear 210) has to have a numerical ratio between the number of teeth of the planetary gear and the number of teeth of the satellite gear lower than the numerical ratio of second bevel gear 12b, 200b comprising second planetary gear 12b and second gear 200b of satellite gear 200 (and, in case of multiple satellite gears, also second gear 210b of second satellite gear 210)

In this way, in the case of the REVERSE pedal stroke, shaft 90 engages first freewheel bearing 13a, which, since it is integral to first planetary gear 12a, transmits to it a REVERSE rotatory motion. For each revolution of shaft 90 and, thus, of first planetary gear 12a, a number of revolutions of first satellite gear 200, 210 is generated, which is equal to their numerical ratio.

First gear 200a of first satellite gear 200 as well as first gear 210a of second satellite gear 210 are respectively rigidly integral to second gears 200b, 210b of first and of second satellite gears 200, 210, so that the satellite gears perform the same number of revolutions, which, though, is not sufficient to cause a complete revolution of second planetary gear 12b, which, together with second gear 210b, 200b meshing with it, has been chosen with a bevel gear numerical ratio higher than the one of the first bevel gear.

Under these conditions, a revolution of 360° of shaft 90 generates a rotation lower than 360° of crown gear group 6.

Similarly, if one wants to obtain a rotation angle of crown gear group 6 equal to 360°, the rotation of shaft 90 has to be performed in the opposite direction and has to be equal to a quantity, expressed in goniometer angles, given by the following formula: 360(Rb/Ra), wherein Rb is the ratio between the number of teeth of second planetary gear 12b and the number of teeth of second gears 200b, 210b meshing with it, while Ra is the numerical ratio between the number of teeth of first planetary gear 12a and the number of teeth of first gears 200a, 210a meshing with it.

Even though the device has been described with reference to a bicycle of the traditional type, suited for example for the use on the road or off-road without limitations of shape and of intended use for non-professional or professional riders and free riders, it can also be used for exercise bicycles of the type used in gyms or in private houses, commonly known as spinning bicycles or stationary bicycles (exercycle), so as to allow the user to train both in the direct pedal stroke and in the reverse pedal stroke.

The advantages of the device according to the present invention are known in the light of the previous description. In particular, it guarantees a propulsion of the bicycle by pedaling in both directions of rotation of the pedal cranks. Therefore, by means of the device according to the present invention, it is possible to rest the muscles used in the traditional pedal stroke (direct pedal stroke) without the need to stop the forward drive of bicycle 100, namely without substantial interruptions in the development of the movement of the bicycle itself, and allowing the rear wheel of the bicycle or the flywheel of the exercise bicycle to also rotate in a reverse direction thanks to the essential presence of rotatory support 17, in case pin 28 is extracted.

Furthermore, the device according to the present invention allows the user to exploit different muscle bundles, using at every time those muscles which do not need rest and leaving to the muscles which have been previously subject to stress the time to remove the increased lactate produced as a consequence of the pedaling movement, in particular if it has been particularly hard.

Besides an advantage concerning the actual muscle stress, the device according to the present invention also allows the exercise of the pedal stroke to be more complete and less monotonous as well as enjoyable and more coordinating.

Yet, in the specific case of the stationary bicycles, the device according to the present invention allows the direction of rotation of the pedal stroke to be reversed while maintaining the same direction of rotation of the flywheel, so as to avoid undesired inertia forces which are due to the inversion of the direction of rotation of the flywheel itself.

Finally, since the crown gear, the drive chain and the pinion keep rotating in the direct rotation direction, all the conventional components traditionally mounted on bicycle 100 remain unaltered, thus allowing the insertion, during assembly, of the present device in place of the traditional bottom bracket in any kind of bicycle suited for this purpose.

Since every projection has been removed from the container of the present device, the latter can comfortably be inserted into the common tunnel of the bottom bracket of each bicycle.

It is understood that, in case the present device is mounted on a stationary or exercise bicycle, rear wheel 5b corresponds to the flywheel.

The device described above can be subject to variations, additions and changes obvious to a person skilled in the art, without in this way going beyond the scope of protection provided by the accompanying claims.

## Claims

1. Device (10, 10') for reversing the direction of rotation of the pedal stroke for bicycles or exercise bikes, comprising:
- a driving rotating shaft (90), rotating around a first axis (X);
- a first driven rotating organ (12a) and a second driven rotating organ (12b) assembled on said driving rotating shaft (90) positioned in a central node (4) of said bicycle (100) or exercise bike; said shaft (90) having ends (90a, 90b) reciprocally opposed each having a respective pedal crank (20a, 20b) pivoted to it;
- a first freewheel bearing (13a) functionally active between the first driven rotating organ (12a) and the driving rotating shaft (90);
- a second freewheel bearing (13b) functionally active between the second driven rotating organ (12b) and the driving rotating shaft (90) for making integral said second rotating organ (12b) to said shaft (90) during the rotation of said shaft in a direction equal to a first direction of rotation of at least a wheel or flywheel of said bicycle (100) or exercise bike; said first and second freewheel bearing (13a, 13b) being assembled with opposed sense of rotation on said shaft (90);
said first driving rotating organ (12a) and said second driving rotating organ (12b) being engaged on at least a satellite assembled on a rotating support (17) separated by said shaft (90) and rotating with respect to it, permitting a rotation in a second direction, opposed to said first direction, of said wheel or flywheel.

2. Device for reversing the direction of rotation of the pedal stroke according to claim 1, wherein said first and second driven rotating organ (12a, 12b) are planetaries.

3. Device for reversing the direction of rotation of the pedal stroke according to claim 2, also comprising a bevel gear comprising said first and second planetary gear(12a, 12b) and at least one satellite (20; 21; 200; 210) rotating on said second axis (W) orthogonal with respect to said first axis (X) of rotation of said shaft (90).

4. Device for reversing the direction of rotation of the pedal stroke according to claim 3, also comprising a rotating support (17) inserted on the shaft (90) and having a first and a second end (18, 19) radially protruding from its body (17a), and wherein said at least a satellite (20; 21; 200; 210) is assembled on at least said first end (18).

5. Device for reversing the direction of rotation of the pedal stroke according to claim 4, wherein said at least one satellite (20; 21; 200; 210) and said first and second planetary gear (12a, 12b) realizing a couple of bevel gears (12a, 20; 200; 12b, 21, 210).

6. Device for reversing the direction of rotation of the pedal stroke according to claim 3, wherein said at least a satellite (200; 210) comprises a couple of gears (200a, 200b; 210a, 210b).

7. Device for reversing the direction of rotation of the pedal stroke according to claims 5 and 6, comprising a first satellite (200) and a second satellite (210); said first satellite having a first gear (200a) engaging upon said first planetary gear (12a) and a second gear (200b) engaging upon said second planetary gear (12b); said second satellite having a first gear (210a) engaging upon said first planetary gear (12a) and a second gear (210b) engaging upon said second planetary gear (12b); and wherein said couple of bevel gears (12a, 20; 200; 12b, 21, 210) comprises a first bevel gear (12a, 20, 200) having a first gear ratio and a second bevel gear (12b, 21, 210) having a second gear ratio.

8. Device for reversing the direction of rotation of the pedal stroke according to claim 4, comprising also a removable pin (28) and in use preventing the rotation of said rotating support (17).

9. Device for reversing the direction of rotation of the pedal stroke according to claim 8, comprising also an annular element (22) containing said rotating support (17) and comprising at least a radially arranged hole (23) and within which is positioned in use said pin (28).

10. Bicycle frame comprising a device (10) for reversing the direction of rotation of the pedal stroke according to any of the preceding claims.

11. Exercise bike comprising a device (10) for reversing the direction of rotation of the pedal stroke according to any of the claims 1 to 10.
